# EUROPEAN PATENT SPECIFICATION

(11) **EP 4 189 289 B1**
(45) Date of publication and mention of the grant of the patent: **01.10.2025**
(21) Application number: 20750222.0
(22) Date of filing: 29.07.2020
(51) Int. Cl.: F23K 5/00, G01D 5/14, F23N 1/00, F24C 3/12, G05G 1/08

(54) **GAS SUPPLY TAP WITH POSITION SENSOR**
GASZUFUHRHAHN MIT POSITIONSSENSOR
ROBINET D'ALIMENTATION EN GAZ AVEC CAPTEUR DE POSITION

(43) Date of publication of application: 07.06.2023
(73) Proprietor: SABAF Beyaz Esya Parçalari San. ve Tic. Ltd. Sti., 45030 Yunusemre, Manisa (TR)
(72) Inventor: SQUICCIARINI, Michele, 25035 Ospitaletto (BS) (IT)
(74) Representative: Marietti, Andrea
(86) International application number: PCT/EP2020/071409
(87) International publication number: WO 2022/022818

(56) References cited:
- EP-A1- 3 399 234
- US-A1- 2013 113 465
- US-A1- 2015 153 048
- US-A1- 2019 271 466

## Description

### TECHNICAL FIELD

The present invention relates to the field of gas supply taps that are provided with a detecting sensor or device to detect the position of the control knob, i.e. of the stem connected to this knob, which controls the opening and closing of a respective valve to selectively allow and prevent the passage of gas through this tap.

### BACKGROUND

The present invention relates in particular to the application of a sensor or device in a so-called electronic catenary (which consists of a set of switches connected to an electronic control unit, each of them is combined with a respective gas tap of a cooking appliance) to any type of tap; this tap may be either provided with a valve or not. The presence or absence of the safety valve affects the functions the electronic catenary can implement. For example, in case of a simple tap, there can be several functions, such as displaying the tap status, ignition, re-ignition. As a further example, in case of a tap provided with a valve, in addition to the previous functions, the circuit of a respective thermocouple can be opened to implement functions such as timed shutdown, and child safety (all thermocouples deactivated).

In fact, gas supply taps provided with an operating stem are well known. Devices for detecting the angular position of the operating stem, which are based for example on encoders, are also known, to allow functions to be carried out electronically, if needed.

For example, DE 19752472 A1 teaches how to mount an angular position sensor on the operating stem of a tap connected to a corresponding control knob, whose signals are used by a controller to adjust the combustion parameters of a burner.

US 2015/153048 A1 discloses a control device for a gas tap which comprises both an activating stem with a relevant control knob (12) for controlling the supply of gas to a burner and a ring nut for setting a time of supply of the gas to the burner. The control device of US 2015/153048 A1 comprises a first detecting device for detecting the angular position of the ring nut and a second detecting device for detecting the axial position of the knob.

EP 3399234 A1 describes a control device for gas appliances comprising a control knob integral to a relevant activating stem which in turn is mechanically coupled to an operating stem. A detecting device for detecting the angular position of the control knob comprises a magnet integral to the operating stem and a relevant magnetic sensor.

US 2019/271466 A1 discloses a control system for gas appliances in which a gas tap has an activating stem with a control knob for controlling the supply of the gas. The control system of US 2019/271466 A1 comprises a detecting device for detecting the angular position of the control knob, having a magnetic element fixed to the control knob and a magnetic field sensor (Hall-effect sensor) fixed to the body of the tap for detecting the angular position of the magnetic element.

US 2013/113465 A1 describes a control knob with a device for detecting the knob position for the use in the automobile industry.

However, there are no known systems that allow the position of the knob and the operating stem of the tap to be precisely detected.

More specifically, knob and stem of a gas supply tap (from now on also called simply "gas tap" or "tap"), in particular a gas tap for a domestic burner, can move both translationally (i.e. axially with respect to the stem axis) and rotationally.

The information detected by the detecting device that detect both the axial and angular positions of the operating stem of the tap can be advantageously used to perform various functions, including the activation of the ignition spark plug, the possible re-ignition of the flame, the visual signaling, for example by LEDs, of the position reached by the knob (corresponding to a certain flow of supplied fuel mixture), the possible setting of an operation timer, etc.

### SUMMARY OF THE INVENTION

Therefore, object the present invention is to implement a gas tap having a system for precisely detecting the stem/knob position. It should be noted that the detection of the position of one of the two elements, as these are usually integral with each other, involves the detection of the position of the other element as well.

It is a further object of the present invention to implement a tap as above, which is simple to manufacture.

These and other objects are achieved by a gas supply tap according to one or more of the appended claims.

In particular, object of the present invention is a gas supply tap according to the appended claim 1. Preferred aspects are stated in the dependent claims.

According to a possible aspect of the invention, a gas supply tap comprises a control knob connected to an operating stem adapted to operate a valve for opening and closing this tap. The tap comprises a detecting device to detect the knob position; at least one component of the detecting device is translationally and rotationally integral with said operating stem.

Therefore, the detecting device comprises a second component adapted to detect the position of the first component. Since the first component is integral with the operating stem, the position thereof, and therefore of the knob, can be easily and directly assessed.

According to the invention the first component (i.e. the component integral with the stem) is a magnet. This magnet is preferably a permanent, diametrically magnetized, magnet (or "diametric magnet").

As known, the magnetic poles of a diametric magnet are not in series along its own axis, but arranged side by side with respect to a plane comprising the axis of the magnet. This magnet typically has spherical or annular section. The name diametric magnet derives from the fact that, in this case, the diameter of the section separates the two magnetic poles.

According to the invention, the tap further comprises a magnetic field sensor adapted to monitor the magnetic field variation caused by the movement of the magnet. This magnetic field sensor can be implemented in a chip or similar element.

It should be noted, in particular, that both axial and rotational movements (with respect to the axis of the operating stem) of a diametric magnet causes the magnetic field formed by the latter to vary, with respect to a point fixed with respect to the same magnet. Thanks to this, both axial and rotational variations of the position of the control knob/operating stem can be assessed by a single magnet.

An aspect of the present invention also concerns a cooktop for food, provided with at least one atmospheric gas burner and at least one tap according to one or more of the aspects discussed above, the latter being intended to feed such an atmospheric burner through the manual regulation of a user.

It should be noted that, herein, the expression "cooktop" generically means any supporting element for one or more atmospheric gas burners that is intended to be implemented in cooking equipment, such as a kitchen range, an independent cooking shelf, etc.

### BRIEF DESCRIPTION OF THE DRAWINGS

Hereinafter, referring to the appended figures, exemplary and non-limiting embodiments of the present invention will be described, wherein:

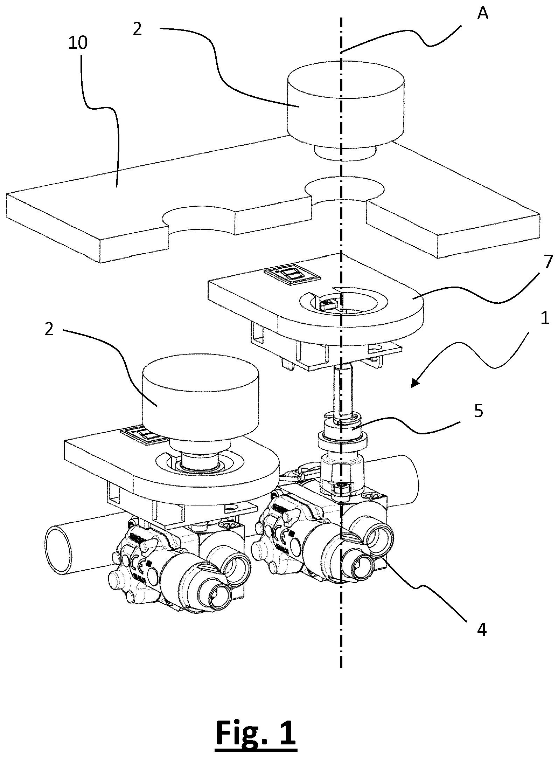

- figure 1 is a perspective view of two taps according to the invention, one of which is shown in exploded view;
- figure 2 is an exploded view of the housing of the magnetic field sensor of the tap in figure 1;
- figure 3 is a schematic plan view of a diametric magnet;

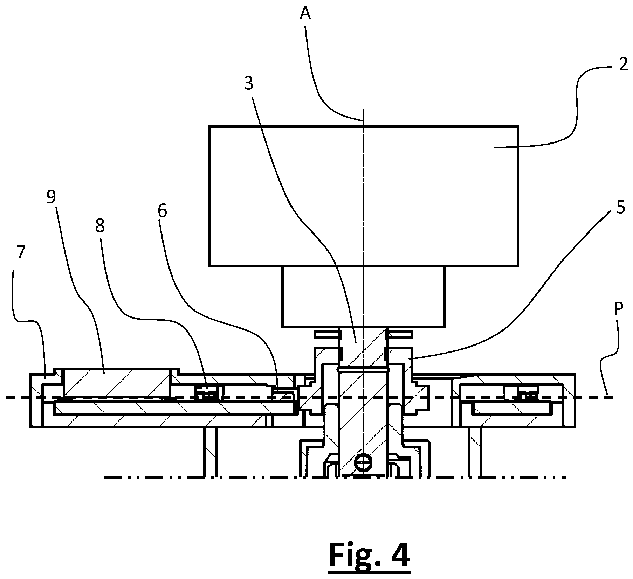

- figure 4 is a partial sectional view of one of the taps in figure 1.

### DETAILED DESCRIPTION

A tap 1 comprises a control knob 2 (also "knob 2" from now on) connected to an operating stem 3 (also "stem 3" from now on) adapted to operate a valve 4, or in any case a shutter, adapted to selectively allow this tap to be opened and closed.

The operational connection between the stem 3 and the valve 4 (or shutter) is known in the art and is not discussed in detail herein. It should also be noted that this connection may be direct or indirect (i.e. by means of additional elements not shown and discussed in detail herein).

Typically, the tap 1 is a domestic burner tap. A preferred embodiment is that of a cooktop 10 provided with at least one atmospheric gas burner fed by at least one tap 1. Therefore, not only the knob 2 can be operated axially, i.e. along the axis A of the stem 3, but it can also be rotated around this axis A. Typically, the axial movement of the knob 2 selectively allows and prevents the passage of gas through the tap 1, while its rotation varies the amount of gas passing through the same tap.

In fact, in the field of cooktops 10, in particular those for domestic use, it is a known solution to couple to the knob 2 a safety device connected to a thermocouple, which in turn is able to detect the flame at the burner controlled by the knob 2 and allows the gas to pass directly to the burner only when a flame is present at the same burner or when the knob 2 is pressed so as to allow the gas to pass thanks to a temporary mechanical action exerted by the user.

The tap 1 comprises a detecting device 5, 6 to detect the position of the knob 2. This device 5, 6 typically comprises a first component 5 translationally and rotationally integral with the stem 3. A second component 6 is configured to detect the displacement of the first component 5.

The first component is a magnet 5, preferably a permanent magnet. The second component is a magnetic field sensor 6, typically implemented in a chip or similar element, adapted to detect the magnetic field variation caused by the movement of the magnet 5, for example by Hall effect.

For this purpose, of course, the magnetic field sensor 6 must be fixed with respect to the magnet 5, so as to detect - preferably by Hall effect as mentioned - the variations in the magnetic field occurring when the axial and angular positions of the operating stem 3 of the tap 1 change.

The electrical signals outputted from the magnetic field sensor 6, indicating the angular and axial positions taken by the operating stem 3, and therefore also the knob 2, with respect to the same sensor 6 suitably constrained to the frame to which the knob 2 and the relative gas supply tap 1 are fixed, can be sent to an electronic controller, which shall activate various functions in relation to the detected spatial position of the stem 3. Possible functions are e.g. the activation of the ignition spark plug of the burner, the activation of LEDs 8 (Light Emitting Diode) to signal to the user the position of the stem 3 (and therefore indirectly the gas amount supplied), the re-ignition of the flame if the controller is also connected to a thermometer or thermocouple combined with the burner and the absence of flame is detected, etc. It should be noted that, in alternative embodiments, the re-ignition can be implemented without thermometer or thermocouple, e.g. the absence of flame can be detected by means of a spark plug, which can be used as an air ionization sensor close to the flame.

The magnetic field sensor 6 is preferably configured to detect the position of the magnet 5 not only at the end of run positions of the stem, but also at one or more intermediate positions. In other words, the magnetic field sensor 6 detects not only the end positions of the stem (both for translation and rotation) but also one or more positions arranged between the translation and rotation ends. Such a magnetic field sensor is for example commercially available as the "3d magnetic sensor" manufactured by Infineon.

The detection of intermediate angular positions with respect to the ends allows, for example, to show the user the position of the knob 2, for example by means of the LEDs 8 better discussed later, regardless of the shape of the knob, which may therefore have circular section without signs (which may be erased over time) on its own surface.

Furthermore, the detection of the angular positions can allow the electronic controlling of the gas supply, for example when the electronic controller, if any, that collects the position signals coming from the sensor 6, is also connected to a thermometer/thermostat combined with the respective burner, so as to automatically adjust the gas supply to maintain a precise temperature at the same burner or to allow possible re-ignition in case the flame goes out accidentally, etc.

In addition, the detection of intermediate positions in the axial travel of the stem 3, for example, allows the ignition spark plug to be activated only after a predefined travel of the stem 3 in order to prevent unwanted ignitions.

As already discussed, the tap 1 typically comprises a magnet 5 integral with the stem 3. In particular, the magnet 5 is translationally and rotationally integral with the stem 3 (and therefore with the knob 2, since the latter in turn is integral with the stem 3).

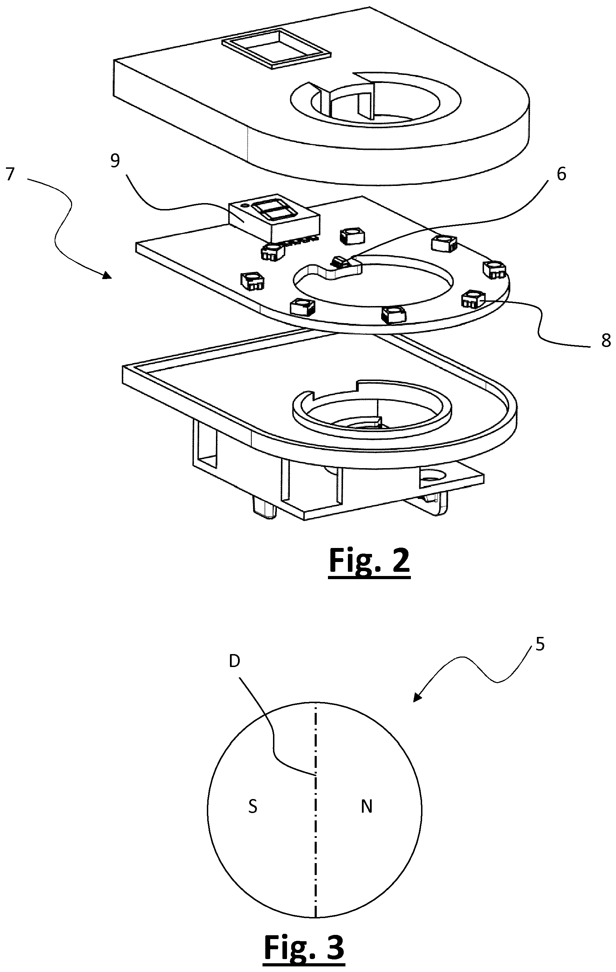

The magnet 5 is preferably a magnet magnetized along only one direction. In particular, in preferred embodiments, the magnet 5 is diametrically magnetized, or a diametric magnet. As known, a diametric magnet, as schematically shown in figure 3, has poles (shown as S and N) that are distally arranged with respect to a plane comprising the axis of the stem 3. In other words, considering the section of a circular diametric magnet, the poles are distally arranged with respect to the diameter D of the section itself. It should be noted that, for convenience, figure 3 shows a magnet *5* having circular section. Actually, since the stem 3 (or an element connected thereto) passes through the magnet 5, the latter typically has annular section.

The magnet 5 is preferably made of neodymium, due to the high intensity of the magnetic field produced. Fixed ferrite can be considered an alternative material.

The magnetic field sensor 6 is typically arranged integrally with the tap 1, not integrally with the stem 3. In other words, when the stem 3 moves axially and/or rotationally with respect to the axis A, the position of the magnetic field sensor 6 does not change.

The magnetic field sensor 6 is typically arranged close to the stem 3, so as to face the magnet 5. Typically, the axial travel of the stem 3 is limited, so that the magnetic field sensor 6 faces the magnet in every possible position of the stem 3. In other words, for each position of the stem 3, there is a plane P perpendicular to the A-axis of the stem 3 that crosses both the magnet 5 and the magnetic field sensor 6. This allows the position thereof to be precisely assessed.

However, it should be noted that in alternative embodiments it is possible to use a sensor 6 and a magnet 5 that are arranged on planes placed at different heights, i.e. without complying with the above described condition concerning the plane P.

It should further be noted that, typically, a diametrically polarized magnet has two positions (arranged 180° apart) in which the magnetic field is zero. In these positions the magnetic field variation, in case of axial displacement of the stem 3, cannot be detected. In other words, the axial displacement of the stem 3 cannot be detected in these positions. According to a possible aspect, the magnet 5 can be arranged with N-S poles in such a position that one of the two positions where the magnetic field is zero is arranged at a position where it is not necessary to detect the axial position of the stem 3 (while the other position can e.g. be arranged so that it cannot be reached by the stem 3).

In particular, the magnet 5 is positioned so that, in the positions where the knob can be pushed (i.e. the stem 3 can be caused to translate), for example to ignite the respective burner, the magnetic field is not zero, so that a variation in the axial position of the stem itself can be detected.

In other words, the positions on the plane P where the magnetic field of the magnet 5 is zero are arranged so that one of them coincides with that position of the stem 3, having this magnet 5 combined therewith, corresponding to the closing of the tap 1 (so-called zero position).

It should also be noted that the solution object of this patent can be used in solutions that only provide for a rotation of the knob 2 (and therefore of the stem 3); in such embodiments, for example, the ignition of the burner would be caused only by the rotation of the knob 2, so that monitoring only the angular position of the stem 3 would be sufficient.

However, alternative solutions are possible. For example, such a plane P could only exist for part of the travel of the stem 3, so that in some positions there may not be a plane P perpendicular to the axis A crossing both elements.

The magnetic field sensor 6 is preferably arranged within a housing 7, which is typically arranged (considering the condition of use) in a lower position with respect to the knob 2.

The magnetic field sensor 6 can be operationally connected to various elements.

For example, as in the embodiment shown in the figure, visual elements can be connected to the magnetic field sensor 6 in order to show a user information about the status of the tap 1, or in any case of the element (typically a domestic burner) connected thereto.

For example, a plurality of LEDs 8, preferably arranged within the housing 7 of the magnetic field sensor 6, can be connected to the magnetic field sensor so as to show the position (and in particular the angular position) of the knob 2.

A display 9 can be connected to the magnetic field sensor 6, in order to signal (qualitatively) the useful power of the burner connected to the tap 1, depending on the position of the knob 2.

In use, a user operates the knob 2 by moving it axially and/or rotating it with respect to the axis A. The detecting device 5, 6 detects the displacement of the component 5 integral with the stem, so as to determine the position of the stem 3. Typically, the magnetic field sensor 6 detects the magnetic field variation caused by the movement of the magnet itself.

This information can be used for various purposes, including the activation of an ignition spark plug of a burner connected to the tap 1, the possible re-ignition of the flame, the visual signaling, for example by means of LEDs 8, of the position reached by the knob (corresponding to a certain flow of supplied fuel mixture), the possible setting of an operation timer, etc.

In use, the tap 1 (and its atmospheric burner) is preferably coupled to a cooktop 10 for food, i.e. it is functionally connected to this cooktop to supply fuel gas to at least one atmospheric burner on this cooktop.

## Claims

1. Gas supply tap (1) comprising a control knob (2) connected to an operating stem (3) adapted to operate a valve or a shutter (4) for opening and closing the tap (1), comprising a detecting device (5, 6) to detect the position of said knob (2), at least one component (5) of said detecting device (5, 6) being translationally and rotationally integral with said operating stem (3), wherein said component (5) is a magnet (5), wherein said detecting device (5, 6) comprises a magnetic field sensor (6) adapted to monitor the magnetic field variation caused by the movement of said magnet (5), **characterized in that** the magnetic field sensor (6) is configured so as to detect the position of the magnet (5) at one or more intermediate positions between the ends of the stem travel in both axial and rotational directions.

2. Tap (1) according to claim 1, wherein said magnet (5) is a permanent magnet.

3. Tap (1) according to claim 1 or 2, wherein said magnet (5) is magnetized along only one direction, and preferably is diametrically magnetized.

4. Tap (1) according to any of the preceding claims, wherein said magnetic field sensor (6) is a Hall-effect sensor.

5. Tap (1) according to any of the preceding claims, wherein said magnetic field sensor (6) is three-dimensional magnetic field sensor.

6. Tap (1) according to any of the preceding claims, wherein for at least part of the operating positions the stem (3) can take, and preferably for all the operating positions of the stem (3), there is a plane (P) perpendicular to the axis (A) of the stem (3) that crosses both the magnet (5) and the magnetic field sensor (6).

7. Cooktop (10) for food comprising at least one atmospheric gas burner fed by at least one tap (1) according to any one of claims 1 to 6.

## Patentansprüche

1. Gaszufuhrhahn (1) mit einem Steuerknopf (2), der mit einer Betätigungsstange (3) verbunden ist, die dazu ausgelegt ist, ein Ventil oder einen Verschluss (4) zum Öffnen und Schließen des Hahns (1) zu betätigen, umfassend eine Erfassungsvorrichtung (5, 6) zum Erfassen der Position des Knopfs (2), wobei mindestens eine Komponente (5) der Erfassungsvorrichtung (5, 6) translatorisch und rotatorisch integral mit der Betätigungsstange (3) verbunden ist, wobei es sich bei der Komponente (5) um einen Magneten (5) handelt,
wobei die Erfassungsvorrichtung (5, 6) einen Magnetfeldsensor (6) umfasst, der dazu ausgelegt ist, die durch die Bewegung des Magneten (5) verursachte Magnetfeldänderung zu überwachen, **dadurch gekennzeichnet, dass** der Magnetfeldsensor (6) so konfiguriert ist, dass er die Position des Magneten (5) an einer oder mehreren Zwischenpositionen zwischen den Enden des Stangenwegs sowohl in axialer als auch in Drehrichtung erkennt.

2. Hahn (1) nach Anspruch 1, wobei der Magnet (5) ein Permanentmagnet ist.

3. Hahn (1) nach Anspruch 1 oder 2, wobei der Magnet (5) nur in einer Richtung magnetisiert ist und vorzugsweise diametral magnetisiert ist.

4. Hahn (1) nach einem der vorherigen Ansprüche, wobei der Magnetfeldsensor (6) ein Hall-Effekt-Sensor ist.

5. Hahn (1) nach einem der vorherigen Ansprüche, wobei der Magnetfeldsensor (6) ein dreidimensionaler Magnetfeldsensor ist.

6. Hahn (1) nach einem der vorherigen Ansprüche, wobei für mindestens einen Teil der Betriebspositionen, die die Stange (3) einnehmen kann, und vorzugsweise für alle Betriebspositionen die die Stange (3) einnehmen kann, eine Ebene (P) senkrecht zur Achse (A) der Stange (3) vorhanden ist, die sowohl den Magneten (5) als auch den Magnetfeldsensor (6) kreuzt.

7. Kochfeld (10) für Speisen, umfassend mindestens einen atmosphärischen Gasbrenner, der von mindestens einem Hahn (1) gemäß einem der Ansprüche 1 bis 6 gespeist wird.

## Revendications

1. Robinet d'alimentation en gaz (1) comprenant un bouton de commande (2) relié à une tige de commande (3) conçue pour faire fonctionner une vanne ou un obturateur (4) pour ouvrir et fermer le robinet (1), comprenant un dispositif de détection (5, 6) pour détecter la position dudit bouton (2), au moins un composant (5) dudit dispositif de détection (5, 6) étant solidaire en translation et solidaire en rotation de ladite tige de commande (3), dans lequel ledit composant (5) est un aimant (5), dans lequel ledit dispositif de détection (5, 6) comprend un capteur de champ magnétique (6) adapté pour surveiller la variation de champ magnétique causée par le mouvement dudit aimant (5), **caractérisé en ce que** le capteur de champ magnétique (6) est configuré de manière à détecter la position de l'aimant (5) à une ou plusieurs positions intermédiaires entre les extrémités de la course de tige à la fois dans les deux directions axiale et rotative.

2. Robinet (1) selon la revendication 1, dans lequel ledit aimant (5) est un aimant permanent.

3. Robinet (1) selon la revendication 1 ou 2, dans lequel ledit aimant (5) est magnétisé le long d'une seule direction, et de préférence diamétralement magnétisé.

4. Robinet (1) selon l'une quelconque des revendications précédentes, dans lequel ledit capteur de champ magnétique (6) est un capteur à effet Hall.

5. Robinet (1) selon l'une quelconque des revendications précédentes, dans lequel ledit capteur de champ magnétique (6) est un capteur de champ magnétique tridimensionnel.

6. Robinet (1) selon l'une quelconque des revendications précédentes, dans lequel, pour au moins une partie des positions de fonctionnement que la tige (3) peut prendre, et de préférence pour toutes les positions de fonctionnement de la tige (3), il existe un plan (P) perpendiculaire à l'axe (A) de la tige (3) qui traverse à la fois l'aimant (5) et le capteur de champ magnétique (6).

7. Table de cuisson (10) pour aliments comprenant au moins un brûleur à gaz atmosphérique alimenté par au moins un robinet (1) selon l'une quelconque des revendications 1 à 6.
